(19) Europäisches Patentamt
European Patent Office
Office européen des brevets

(11) Publication number: **0 559 890 A1**

# (12) EUROPEAN PATENT APPLICATION published in accordance with Art. 158(3) EPC

(21) Application number: **91916746.0**

(22) Date of filing: **01.10.91**

(86) International application number: **PCT/JP91/01320**

(87) International publication number: **WO 93/07215 (15.04.93 93/10)**

(51) Int. Cl.[5]: **C08L 67/02**, C08L 67/04

(43) Date of publication of application: **15.09.93 Bulletin 93/37**

(84) Designated Contracting States: **BE DE FR GB IT**

(71) Applicant: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **DEGUCHI, Yoshikuni**
**6, Maikodai 6-chome, Tarumi-ku**
**Kobe-shi, Hyogo-ken 655(JP)**
Inventor: **YONEZAWA, Kazuya**
**12-11, Tsutsujigaoka 5-chome, Tarumi-ku**
**Kobe-shi, Hyogo-ken 655(JP)**
Inventor: **HAMAGUCHI, Shigeki, Kodan No. 42-501**
**1-ban, Minatojima Nakamachi 3-chome, Chuo-ku**
**Kobe-shi, Hyogo-ku 650(JP)**
Inventor: **TAMAI, Kazuhiko**
**6-530, Maikodai 6-chome, Tarumi-ku**
**Kobe-shi, Hyogo-ken 655(JP)**

(74) Representative: **VOSSIUS & PARTNER**
**Postfach 86 07 67**
**D-81634 München (DE)**

## (54) THERMOPLASTIC RESIN COMPOSITION AND PRODUCTION THEREOF.

(57) A thermoplastic resin composition which comprises: (A) 1 to 100 parts by weight of a modified polyolefin having one glycidylic structural unit represented by general formula (I) wherein Ar represents a $C_6$ to $C_{23}$ aromatic hydrocarbon group having at least one glycidyloxy group and R represents hydrogen or methyl, for every 2 to 1,000 repeating olefin units, and (B) 100 parts by weight of a polyester. It gives a molded article with excellent mechanical properties such as impact resistance and good surface properties, because a strong affinity exists at the boundary between the polyolefin and the polyester.

EP 0 559 890 A1

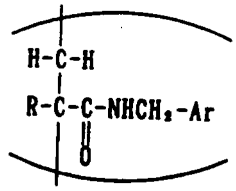

(I)

## TECHNOLOGY FIELD

The present invention relates to a thermoplastic composition comprising a modified polyolefin polymer and a polyester and to production method thereof, more particularly, to a thermoplastic resin composition having excellent compatibility, mechanical property, heat resistance, moldability and chemical resistance, and to production method thereof.

## BACKGROUND OF THE INVENTION

Recently, an attempt to obtain a resin composition having the both features of a polyolefin resin and a polyester resin by blending the above both resins has been noted to improve the mechanical property, heat resistance, dyeability and paintability of the polyolefin resin and to improve the brittleness of the polyester resin. However, the compatibility between the polyolefin resin and the polyester resin is generally low, accordingly the resin obtained by simple blending, for example, by molten kneading of the both resins has poor mechanical strength and bad surface properties because of poor compatibility between the both resins.

A method to modify a polyolefin resin by copolymerization of a polyolefin and an unsaturated carboxylic acid anhydride has been known, in order to improve the compatibility between the above both resins. As the unsaturated carboxylic acid, maleic acid anhydride and the homologues thereof may be used. For example, Japanese Patent Publication No.43-3974 discloses a method for producing an improved resin composition by graft-polymerization of an unsaturated carboxylic acid to a polyolefin resin.

Thus, in conventional modified polyolefin resin, compounds with functional groups, so-called a modifying agent, maleic acid anhydrides and the homologues thereof have been used. However, in the resin composition produced by using such modified polyolefin resins, the sufficient improvement of characteristics has not always been observed, requiring the more improvement of characteristics for practical use.

The object of the present invention is the improvement of characteristics of resin compositions obtained by using a new modifying agent instead of maleic acid anhydrides and the homologues thereof.

## DISCLOSURE OF THE INVENTION

The present invention, in the first aspect, is to.provide a thermoplastic resin composition comprising

(A)1-100 weight parts of modified polyolefin polymer having one structural unit of a glycidyl group represented by the following general formula (I) per 2-1,000 repeating units of olefin:

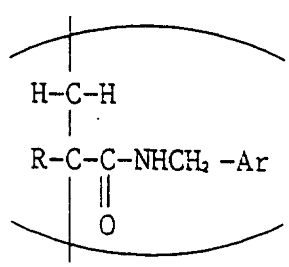

(I)

where Ar represents an aromatic hydrocarbon group 6-23 in carbon number having at least one glycidyloxy group, and R represents a hydrogen atom or a methyl group, and

(B)100 weight parts of a polyester.

The present invention is, in the second aspect, to provide a method for producing the aforementioned thermoplastic resin composition characterized by molten kneading of the above both components (A) and (B).

## BEST MODE FOR PRACTICING THE INVENTION

The modified polyolefin polymer as the component (A) has one structural unit of a glycidyl group represented by the following general formula (I) per 2-1,000 repeating units, preferably 5-200 repeating units of olefin:

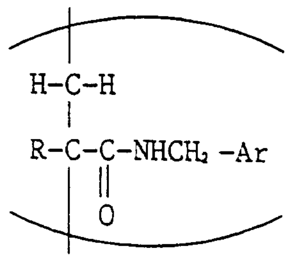

(I)

where formula, Ar represents an aromatic hydrocarbon group 6-23 in carbon number having at least one glycidyloxy group and R represents a hydrogen atom or a methyl group. It is an important constituent element of the present invention and it derives from a modifying agent having at least one acryl amide group and a glycidyl group, respectively. The acryl amide group also includes, besides acryl amide group, methacryl amid group.

As to such modifying agent, there is no particular structural limitation if it has acryl amide group and glycidyl group, but preferred is a compound represented by the general formula (III):

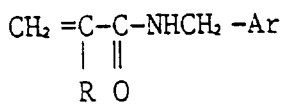

(III)

where Ar and R are the same as in the general formula(I).

Such compounds can be manufactured by a method described in Laid-open Patent Publication No. 60-130580. That is, it is obtainable by condensing an aromatic hydrocarbon having at least one phenolic hydroxyl group with N-methylol acrylamide or N-methylol methacrylamide in the presence of an acidic catalyst and then by glycidylization of the hydroxyl group by the use of epihalohydrin. As the aforementioned aromatic hydrocarbon having at least one phenolic hydroxyl group, a phenol compound 6-23 in carbon number is used. As specific examples of the aforementioned phenolic compound, there may be included phenol, cresol, xylenol, carbachlor, thymol, naphthol, resorcin, hydroquinone, pyrogarol and phenantrol. Of these compounds, most preferred may be a mono-valent phenol having alkyl substitution group.

When, for example, 2,6-xylenol and N-methylol acryl amide are used as starting materials, a compound represented by the following structural formula (IV) will be obtained:

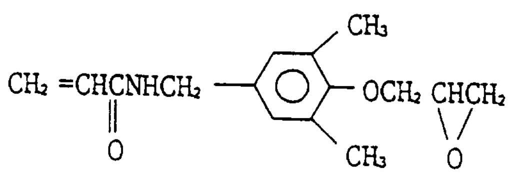

(IV)

When ortho-cresol and N-methlol acryl amide is used as starting materials, the resultant compound will be of the following structural formula (V):

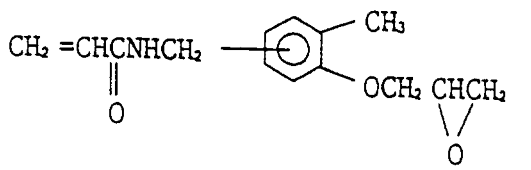

(V)

The amide bond in the structural unit of the general formula (1) improves not only dyeability and paintability, but affinity with a polyester, while the glycidyl group contributes to an improvement of mechanical strength, heat resistance and compatibility of the resin composition through the possible reaction with a carboxylic acid and hydroxyl group at the terminals of the polyester.

If the proportion of the structural units having a glycidyl group represented by the general formula (I) is less than the aforementioned proportion, no sufficient properties-improving effect is obtainable, while if this proportion is too high, it is not preferable, either, since beneficial innate propeties of resin compositions are lost. Thus, it is necessary that the modified polyolefin polymers of the present invention contain one structural unit having glycidyl group of the aforementioned general formula (I) per 2-1,000, preferably 5-200 repeating units of olefin.

The structural unit having a glycidyl group represented by the general formula (I) is exemplified by one represented by the following formula (II):

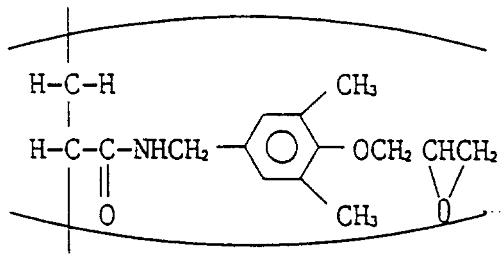

(II)

In the modified polyolefin polymers of the present invention, the structural unit represented by the general formula (I) may possibly exist at random or regularly blockwise, or may as well exist at the end of the molecule or as graft. There is no particular limitation for the molecular weight of the modified polyolefin polymers comprising polyethylene, polypropylene et cetera, but preferably it may be in a range of 3,000-1,000,000 and more preferably 10,000-500,000. When a polydiene is used as a starting material, there is practically no limitation for its molecular weight and selection may be made from those low to high in molecular weight. The polydiene used may be 1, 2-polymer or as well be cis- or trans-1, 4-polymer. The diene unit of the resulting modified polydiene type polymers may again be 1, 2-polymerization or cis- as well as trans-1, 4 polymerization.

There is no particular limitation about the method for manufacturing the modified polyolefin polymers but the following two methods may be particularly suitable.

The first of these two methods is the so-called polyolefin resin graft modification method, in which two components of a polyolefin (a) and a modifying agent (b) having a glycidyl group represented by the aforementioned general formula (III) are subjected to radical addition by the use of a radical polymerization initiator (c). In this reaction, a proper solvent for dissolving or swelling polyolefins such as tetralin, decalin, toluene, xylene or chlorobenzen may be used. It is also possible to cause a polyolefin resin to react in the molten state by the use of an extruder, kneader, heating roller and the like without using solvents.

There is no limitation about the polymerization initiator used and common radical initiators may be used. For example, peroxides such as cumene hydroperoxide, tertiary butylhydroperoxide, benzoyl peroxide, lauroyl peroxide, decanoyl peroxide and acetyl peroxide or azo compounds such as azobisisobutyronitrile may be used alone or in combination of two or more.

The second manufacturing method is to cause an olefin monomer to copolymerize with a modifying agent represented by the aforementioned general formula (III). There is no particular limitation about the copolymerization method and, besides common radical polymerization method, cationic polymerization method and anionic polymerization method, coordination polymerization method by the use of a transition metal and the like are also feasible.

As the polyolefins or olefin monomers used in the present invention, there may be included ethylene, propylene, 1-butene, 1-pentene, iso-butene et cetera; homopolymers thereof; conjugate dienes such as butadiene, isoprene, chloroprene and phenyl propadiene; homopolymers of such conjugate dienes; cyclic dienes such as cyclopentadiene, 1, 5-norbornanediene, 1, 3-cyclohexadiene, 1, 4-cyclohexadiene, 1, 5-cyclooctadiene and 1, 3-cyclooctadiene; homopolymers of these cyclic dienes; $\alpha$ , $\omega$-nonconjugate dienes, etc. Random copolymers and block copolymers of olefins with vinyl compounds, etc., to say nothing of these olefins each other, are usable.

The polyester as the component (B) used in the present invention may be any one if it has a repeating unit of a polyester bond (-COO-). By the form of polymerization, there are (1) ring-opening of lactones, (2) reaction of at least one compound selected from the group consisting of dihydric alcohols and dihydric phenols with at least one compound selected from the group consisting of dicarboxylic acids, acid anhydrides thereof, acid halides thereof, and lower esters thereof.

As concrete examples, there are polycaprolactones, polyvaleolactones etc., for the method (1), ethylene glycol, propylene glycol, tetramethylene glycol as the dihydric alcohol, bis (4-hydroxyphenyl) methane, 2, 2-bis (4-hydroxyphenyl) propane, bis (4-hydroxyphenyl) sulfon etc., besides hydroquinone, as the dihydric phenol, aliphatic dicarboxylic acids such as oxalic acid, succinic acid, adipic acid, methyladipic acid, suberic acid and sebacic acid, and aromatic dicarboxylic acids such as phthalic acid, terephthalic acid and isophthalic acid, as the dicarboxylic acid, for the method (2). There is no limitation about the combination of the dihydric alcohol and/or dihydric phenol, and the dicarboxylic acid, and copolymers obtained by copolymerization of two or more may be used. Moreover, mixtures of polyesters of two or more kinds may also be used.

As a method for producing the resin composition of the present invention, there is, for example, a method wherein the above modified polyolefin polymer (A) and the polyester (B) are molten kneaded. In molten kneading, known equipment may be used.

For example, there are a heating roll, an extruder, Bunbury mixer and Bravender. Temperature for melting and power required for kneading may be appropriately adjusted depending upon the molecular weight of a resin used.

The mixing ratio of the modified polyolefin polymer (A) and the polyester (B) is 1~100 weight parts of the component (A) to 100 weight parts of the component (B). The component (A) less than 1 weight part lowers mechanical properties including impact resistance. On the other hand, the component (A) more than 100 weight parts lowers the heat resistance inherent in the polyester.

To the resin composition of the present invention, if necessary, a catalyst (C) to allow the modified polyolefin resin (A) to react with the polyester (B) may be added. As such catalyst (C), unrestrictedly, one or more of compounds to promote the reaction of the carboxylic group, hydroxyl group or ester group with the glycidyl group may be selected. Preferred catalysts are amine compounds such tertiary amines, ammonium salts, phosphorous compounds such as phosphonium salts and phosphines, and imidazoles, and these may be used singly or in combination of two or more.

The amount of the catalyst (C) is preferably 0.01~1 weight part, more preferably 0.02~0.5 weight part to 100 weight parts of the polyester. A method for adding the catalyst (C) is not particularly limited, but it is preferred to admix it uniformly with the components (A) and (B) when the both components are mixed.

Further, to the resin composition of the present invention, if necessary, heat stabilizers, ultraviolet ray absorbers, antioxidants, fillers, antistatics agents, lubricants, coloring agents, flame retarders, and organic or inorganic reinforcing agents may be added.

The present invention will be explained by means of the following examples, but the invention is not restricted by these examples.

In the following description, "part" and "%" indicate "weight part" and "weight %" respectively, unless otherwise indicated.

Further, the graft quantity indicates the weight % of the modifying agent contained in the modified polyolefin, and the graft reaction rate indicates the rate (weight %) of the modifying agent reacted with the polyolefin in the modifying agent used for modifying the polyolefin.

Reference Example 1 : Synthesis of modifying agent

A mixture of 102.6 parts of 4-acrylamidomethyl-2,6-dimethylphenol, 181 parts of epichlorohydrin, and 2.27 parts of benzyltriethylammonium chloride was stirred at 100 °C for 30 minutes. To the reaction mixture cooled to 50 °C, 147 parts of 5-N sodium hydroxide was added dropwise in 10 minutes under stirring, then the mixture was stirred at 45~50 °C for 1 hour.

To the mixture cooled to room temperature, 120 parts of methyl isobutyl ketone and 500 parts of water were added and separated. The organic layer was washed 3 times with 300 parts of water, dehydrated with anhydrous sodium sulfate, then the solvent was vacuum distilled off to gain N-[4-(2,3-epoxypropoxy) -3,5-dimethylphenylmethyl]acrylamide. The epoxy equivalent measured by JIS-K7236 was 271, and the melting point was 90~92 °C.

Reference Example 2 : Synthesis of modified polyolefin polymer (A-1)

To 100 parts of low density polyethylene (Sholex-M171 of Showa Denko Co., Ltd. hereinafter abbreviated as LDPE) of 7g/10 min. of melt-flow rate measured by JIS-K6760, 3 parts of the modifying agent obtained in the above Reference Example 1 and 0.1 part of $\alpha$ ,$\alpha$'-bis(t-butylperoxy-m-isopropyl)benzene (Perbutyl-P of Nihon-yushi Co., Ltd.) were mixed at ordinary temperature. The mixture was fed into a two axes extruder (PCM-30 of Ikegai Steel Co., Ltd.) fixed to 220 °C at a rate of 4 kg/hr. The extruded reaction

mixture was cooled with water to be pelletized, then the pellets were dried under reduced pressure at 80 °C for 3 hours.

The dried pellets thus obtained were dissolved into xylene heated to 120 °C, and the xylene solution was added dropwise to acetone and the modified resin was reprecipitated to remove an unreacted modifying agent and a homopolymer of the modifying agent. From the elementary analysis value of the nitrogen atom contained in the modified resin after reprecipitation and the analysis value of epoxy group by FT-IR method, the graft quantity of the modifying agent was 2.5% and the graft reaction rate was 86%.

The modified olefin polymer had one structure unit derived from the compound of the formula (IV) per 231 repeating units of olefin.

Reference Example 3~6 : Synthesis of modified polyolefin polymers (A-2~A-5)

Modified polyolefin polymers were synthesized and the graft quantity and the graft reaction rate of the modifying agent were measured, respectively, in the same manner as in Reference Example 2, except that parts of the modifying agent to polyethylene were changed. The results are given in Table 1.

The numer of the repeating units having one structure unit derived from the compound of the formula (IV) is also given in Table 1.

Reference Example 7 : Synthesis of modified polyolefin polymer (A-6)

To 100 parts of high density polyethylene (Sholex-F6040C of Showa Denko Co., Ltd. hereinafter abbreviated as HDPE) of 4g/10 min. of melt-flow rate measured by ASTM D-1238, 10 parts of the modifying agent obtained in the above Reference Example 1 and 0.1 part of α ,α'-bis(t-butylperoxy-m-isopropyl)-benzene (Perbutyl-P of Nihon-yushi Co., Ltd.) were mixed at ordinary temperature. The mixture was fed into a two axes extruder (PCM-30 of Ikegai Steel Co., Ltd.) fixed to 220 °C at a rate of 4 kg/hr. The extruded reaction mixture was cooled with water to be pelletized, then the pellets were dried under reduced pressure at 80 °C for 3 hours.

The dried pellets thus obtained were treated in the same manner as in Reference Example 2 and the graft quantity of the modifying agent was 7.0% and the graft reaction rate was 77%.

The modified olefin polymer had one structure unit derived from the compound of the formula (IV) per 79 repeating units of olefin.

Reference Example 8 : Synthesis of modified polyolefin polymer (A-7)

To 100 parts of linear polyethylene (Sumikasen L-F6040C of Sumitomo Chemical Industry Co., Ltd. hereinafter abbreviated as LLDPE) of 0.8g/10 min. of melt-flow rate measured by JIS-K 6760, 7 parts of the modifying agent obtained in the above Reference Example 1 and 0.1 part of α ,α'-bis(t-butylperoxy-m-isopropyl)benzene (Perbutyl-P of Nihon-yushi Co., Ltd.) were mixed at ordinary temperature. The mixture was fed into a two axes extruder (PCM-30 of Ikegai Steel Co., Ltd.) fixed to 220 °C at a rate of 4 kg/hr. The extruded reaction mixture was cooled with water to be pelletized, then the pellets were dried under reduced pressure at 80 °C for 3 hours.

The dried pellets thus obtained were treated in the same manner as in Reference Example 2 and the graft quantity of the modifying agent was 4.6% and the graft reaction rate was 70%.

The modified olefinic polymer had one structure unit derived from the compound of the formula (IV) per 123 repeating units of olefin.

Reference Example 9 : Synthesis of modified polyolefin polymer (A-8)

To 100 parts of ethylene-propylene copolymer (EP02P of Japan Synthetic Rubber Co., Ltd. hereinafter abbreviated as EPR) of 3.2g/10 min. of melt-flow rate in case of a 2.2 kg load at 230 °C, 5 parts of the modifying agent obtained in the above Reference Example 1 and 0.1 part ofα ,α'-bis(t-butylperoxy-m-isopropyl)benzene (Perbutyl-P of Nihon-yushi Co., Ltd.) were mixed at ordinary temperature. The mixture was fed into a two axes extruder (PCM-30 of Ikegai Steel Co., Ltd.) fixed to 220 °C at a rate of 4 kg/hr. The extruded reaction mixture was cooled with water to be pelletized, then the pellets were dried under reduced pressure at 80 °C for 3 hours.

The dried pellets thus obtained were treated in the same manner as in Reference Example 2 and the graft quantity of the modifying agent was 4.0% and the graft reaction rate was 84%.

The modified olefinic polymer had one structure unit derived from the compound of the formula (IV) per 130 repeating units of olefin.

Reference Example 10: Synthesis of modified polyolefin polymer (A-9)

The modified polyolefin polymer (A-9) was synthesized in the same manner as in Reference Example 9, except that parts of the modifying agent to the ethylene-propylene copolymer were changed.

The graft quantity of the modifying agent was 5.9% and the graft reaction rate was 90%.

The modified olefin polymer had one structure unit from the compound of the formula (IV) per 86 repeating units of olefin.

Reference Example 11: Synthesis of modified polyolefin polymer (A-10)

To 100 parts of polypropylene (Noblen-H501 of Sumitomo Chemical Industrial Co., Ltd. hereinafter abbreviated as PP) of 3.5g/10 min. of melt-flow rate measured by JIS-K6758, 5 parts of the modifying agent obtained in the above Reference Example 1 and 0.1 part of$\alpha,\alpha$'-bis(t-butylperoxy-m-isopropyl)benzene (Perbutyl-P of Nihon-yushi Co., Ltd.) were mixed at ordinary temperature. The mixture was fed into a two axes extruder (PCM-30 of Ikegai Steel Co., Ltd.) fixed to 210 °C at a rate of 4 kg/hr. The extruded reaction mixture was cooled with water to be pelletized, then the pellets were dried under reduced pressure at 80 °C for 3 hours.

The dried pellets thus obtained were treated in the same manner as in Reference Example 2 and the graft quantity of the modifying agent was 3.7% and the graft reaction rate was 78%.

The modified olefin polymer had one structure unit from the compound of the formula (IV) per 115 repeating units of olefin.

Examples 1~27

Each of mixtures of the modified polyolefin polymers (A-1 ~ A-10) obtained by the above mentioned Reference Examples 2~11, polyester and glass fiber, as set forth below, and a catalyst mixed in mixing ratios as shown in Table 2 at ordinary temperature was fed into a two axes extruder (PCM-30 of Ikegai Steel Co., Ltd.) fixed to the predetermined temperature (230 °C when polybutylene terephthalate was used as a polyester, 260 °C when polyethylene terephthalate was used as a polyester) at a rate of 8 kg/hr. The extruded reaction product was cooled with water to be pelletized, then the pellets were dried under reduced pressure at 120 °C for 15 hours to produce a pelletized resin composition.

Polybutylene terephthalate (Hauzer-S1000 of Kurare Co., Ltd.) and polyethylene terephthalate (Kurapet KL226R of Kurare Co., Ltd.) were used, respectively.

Catalyst:

Tetrabutylphosphonium bromide (product of Aldrich Chemical Company) was used.

Glass fiber:

Glass fiber (hereinafter abbreviated as GF)(Chopped Strand ECS03T-195H/PS of Nihon Denki Glass Co. Ltd.) was used.

Comparative Examples 1~10

Each of the polyester alone, mixtures of the polyester and the polyolefin (i.e., LDPE, HDPE, LLDPE, EPR and PP) mixed at ordinary temperature in the mixing ratios shown in Table 2 was fed into a two axes extruder (PCM-30 of Ikegai Steel Co., Ltd.) fixed to (230 °C when polybutylene terephthalate was used as a polyester, 260 °C when polyethylene terephthalate was used as a polyester) at a rate of 8 kg/hr. The extruded product was cooled with water to be pelletized, then the pellets were dried under reduced pressure at 120 °C for 15 hours to produce a pelletized resin composition.

The pelletized resin compositions thus prepared by Examples 1~27 and Comparative Examples 1~10 (dried under reduced pressure at 120 °C for 15 hours) or thier molded articles were subjected to injection molded by a injection molding machine (IS80EPN-2A of Toshiba Co., Ltd.) fixed to its cylinder temperature of 230 °C or 260 °C to thus prepare test pieces. This test piece was tested for Izod impact strength, retention heat stability and the particle size of a dispersed phase according to the methods as set forth below:

Izod impact strength with notch:

In accordance with the measurement method specified by JIS-K 7110, the test was conducted with

fixing the teperature of the test piece and atmosphere at test to 23 ° C. The results are given in Table 2.

Retention heat stability/Flow property:

The dried pellets were fed into a flow tester (CFT-500A of Shimadzu Seisakusho) heated to 250 ° C and the values of flow ($10^{-2}$ cc/sec) were measured after retention for 5 minutes or 10 minutes at a load of 100 $kg/cm^2$. The results are given in Table 3.

Particle size of a dispersed phase:

The frozen section of the molded article under a liquid nitrogen temperature was observed by scanning type electron microscope ( × 650 of Hitachi Seisakusho) and the particle size of a dispersed phase was measured. The results are given in Table 4.

Table 1

| Modified polyolefin resin | Resin composition(parts) | | | Graft Quantity (%) | Graft reaction rate (%) | Number of repeating unit of olefin (pieces) |
|---|---|---|---|---|---|---|
| | Poly-olefin | Modifying agent | Per-oxide | | | |
| A-1 :Modified LDPE | 100 | 3 | 0.1 | 2.5 | 86 | 231 |
| A-2 :Modified LDPE | 100 | 5 | 0.1 | 3.9 | 82 | 146 |
| A-3 :Modified LDPE | 100 | 7 | 0.1 | 5.8 | 89 | 96 |
| A-4 :Modified LDPE | 100 | 10 | 0.1 | 7.5 | 82 | 73 |
| A-5 :Modified LDPE | 100 | 15 | 0.1 | 10.4 | 80 | 51 |
| A-6 :Modified HDPE | 100 | 10 | 0.1 | 7.0 | 77 | 79 |
| A-7 :Modified LLDPE | 100 | 7 | 0.1 | 4.6 | 70 | 123 |
| A-8 :Modified EPR | 100 | 5 | 0.1 | 4.0 | 84 | 130 |
| A-9 :Modified EPR | 100 | 7 | 0.1 | 5.9 | 90 | 86 |
| A-10:Modified PP | 100 | 5 | 0.1 | 3.7 | 78 | 115 |

Table 2

| | | Resin composition: kind of polyester 100 parts | Resin composition: Modified polyolefin resin kind | Resin composition: Modified polyolefin resin parts | Resin composition: Catalyst parts | Resin composition: G F parts | Impact strength (kgf·cm/cm) 23°C |
|---|---|---|---|---|---|---|---|
| Examples | 1 | Poly-buthlene tere-phthalate | A-1 | 5 | 0.1 | 0 | 7.1 |
| | 2 | | A-1 | 10 | 0.1 | 0 | 9.5 |
| | 3 | | A-1 | 20 | 0.1 | 0 | 12.9 |
| | 4 | | A-1 | 40 | 0.1 | 0 | 14.2 |
| | 5 | | A-2 | 5 | 0.1 | 0 | 7.2 |
| | 6 | | A-2 | 10 | 0.1 | 0 | 9.5 |
| | 7 | | A-2 | 20 | 0.1 | 0 | 13.4 |
| | 8 | | A-2 | 40 | 0.1 | 0 | 15.1 |
| | 9 | | A-3 | 20 | 0.1 | 0 | 14.1 |
| | 10 | | A-4 | 20 | 0 | 0 | 12.3 |
| | 11 | | A-4 | 20 | 0.1 | 0 | 14.3 |
| | 12 | | A-5 | 20 | 0.1 | 0 | 16.7 |
| | 13 | | A-6 | 20 | 0 | 0 | 9.1 |
| | 14 | | A-6 | 20 | 0.1 | 0 | 11.4 |
| | 15 | | A-7 | 20 | 0.1 | 0 | 13.0 |
| | 16 | | A-8 | 20 | 0.1 | 0 | 21.4 |
| | 17 | | A-9 | 20 | 0.1 | 0 | 21.7 |
| | 18 | | A-10 | 20 | 0.1 | 0 | 8.0 |
| | 19 | Poly-ethylene tere-phthalate | A-1 | 20 | 0.1 | 0 | 6.5 |
| | 20 | | A-2 | 20 | 0.1 | 0 | 6.9 |
| | 21 | | A-3 | 20 | 0.1 | 0 | 7.3 |
| | 22 | | A-4 | 20 | 0 | 0 | 5.5 |
| | 23 | | A-4 | 20 | 0.1 | 0 | 7.5 |
| | 24 | | A-5 | 20 | 0.1 | 0 | 7.7 |
| | 25 | | A-6 | 20 | 0.1 | 0 | 6.0 |
| | 26 | | A-3 | 15 | 0.1 | 40 | 13.3 |
| | 27 | | A-6 | 15 | 0 | 40 | 8.5 |
| Comp. Examples | 1 | Poly-buthlene tere-phthalate | – | 0 | 0 | 0 | 5.5 |
| | 2 | | LDPE | 20 | 0 | 0 | 7.4 |
| | 3 | | HDPE | 20 | 0 | 0 | 6.5 |
| | 4 | | LLDPE | 20 | 0 | 0 | 8.5 |
| | 5 | | EPR | 20 | 0 | 0 | 16.1 |
| | 6 | | PP | 20 | 0 | 0 | 5.6 |
| | 7 | Poly-ethylene tere-phthalate | – | 0 | 0 | 0 | 3.0 |
| | 8 | | LDPE | 20 | 0 | 0 | 4.7 |
| | 9 | | HDPE | 20 | 0 | 0 | 3.5 |
| | 10 | | – | 0 | 0 | 40 | 4.8 |

Table 3

| | | Modified polyolefin resin (%) kind:graft quantity | Flow value (× $10^{-2}$ cc/sec) Retention 5 min./10min. |
|---|---|---|---|
| Example | 9 | Modified LDPE: 5.8 | 2.4 / 2.4 |
| | 11 | Modified LDPE: 7.5 | 1.7 / 1.7 |
| | 12 | Modified LDPE: 10.4 | 0.3 / 0.4 |
| Comp. Example | 2 | LDPE | 6.0 / 7.1 |

Table 3 shows that the resin compositions of the present invention is superior in heat resistance after retention, flow values even under condition of retention at a high temperature being hardly varied.

Table 4

| | | Modified polyolefin resin (%) kind:graft quantity | Particle size of a dispersed phase (µm) |
|---|---|---|---|
| Example | 10 | Modified LDPE: 7.5 | 0.1 ~ 1 |
| | 11 | Modified LDPE: 7.5 | < 0.1 |
| | 13 | Modified HDPE: 7.0 | 0.1 ~ 2 |
| | 14 | Modified HDPE: 7.0 | 0.05 ~ 0.5 |
| Comp. Example | 2 | LDPE | 1 ~ 5 |
| | 3 | HDPE | 1 ~ 5 |

Table 4 exhibets that the resin compositions of the present invention have a phase structure in which the modified polyolefin resin is dispersed in the polyester matrix in the particle size of an approximately order of submicron.

Examples 28~31, Comparative Example 11

Each of mixtures of 100 parts of polycarbonate and the modified polyolefin polymer (A-3) obtained by Reference Example 3 and the catalyst mixed at ordinary temperature in mixing ratios as shown in Table 5 was fed into a two axes extruder (PCM-30 of Ikegai Steel Co., Ltd.) fixed to 270°C at a rate of 8 kg/hr. The extruded reaction product was cooled with water to be pelletized, then the pellets were dried under reduced pressure at 120 °C for 15 hours to produce a pelletized resin composition.

The so obtained pelletized resin compositions were tested for impact strength, heat stability and chemical resistance,

The results are given in table 5.

Polycarbonate:

Bisphenol A type polycarbonate (Average molecular weight: 28,000)

Catalyst:

Tetrabutylphosphonium bromide

Table 5

| | Resin Composition | | | | Results | | | |
|---|---|---|---|---|---|---|---|---|
| | Polycarbonate parts | Modified polyolefin resin kind | Modified polyolefin resin parts | Catalyst part | Impact resistance (Kgf · cm/cm.) 3.2mm | Impact resistance (Kgf · cm/cm.) 6.4mm | Heat resistance (℃) | Chemical resistance *1) |
| Example 28 | 100 | A−3 | 0.5 | 0.1 | 74 | 45 | 140 | △ |
| 29 | 100 | A−3 | 3 | 0.1 | 73 | 65 | 135 | ○ |
| 30 | 100 | A−3 | 6 | 0.1 | 74 | 72 | 132 | ○ |
| 31 | 100 | A−3 | 6 | 0 | 72 | 63 | 136 | ○ |
| Comp.Ex.11 | 100 | — | 0 | 0 | 80 | 12 | 144 | × |

Impact resistance : In accordance with ASTM D-256 (with notch), measurement was conducted at 23℃.

Heat stability : In accordance with ASTM D-648, measurement was conducted at 264 psi.

*1)
Chemical resistance: Appearance of the test piece after dipping it in toluene for 24 hours at 23 ℃ was observed with naked eyes according to the following criteria:

○ : No change on the surface of the test piece is noticeable.

△ : Slight change on the surface of the test piece is noticeable

× : Cracks on the surface of the test piece are noticeable.

POSSIBILITY OF INDUSTRIAL APPLICATION

The present invention provides the strong affinity in the interface between a polyolefin and a polyester, and provides a composition giving molded articles, having good mechanical properties such as impact resistance and good surface property. Moreover, the resin composition of the present invention has excellent retention heat stability and thus it is suitable for molten molding such as injection, extrusion and blow. Making use of such characteristics, the resin composition of the invention has wide industrial applications for molded articles as well as fiber and film. By injection, extrusion, blow and compression molding used for ordinary thermoplastic resin, desired molded articles can be obtained. These molded articles are useful as various mechanical, electric and electronic parts.

## Claims

1. A thermoplastic resin composition comprising
(A) 1-100 weight parts of a modified polyolefin polymer having one structural unit of a glycidyl group represented by the following general formula (I) per 2-1,000 repeating units of olefin:

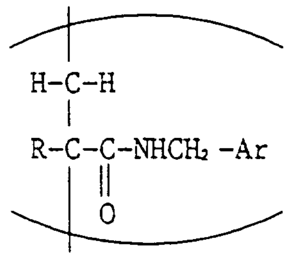

(I)

where Ar represents an aromatic hydrocarbon group 6-23 in carbon number having at least one glycidyloxy group, and R represents a hydrogen atom or a methyl group, and
(B) 100 weight parts of a polyester.

2. The thermoplastic resin composition according to claim 1, wherein 0.01~1 weight part of a catalyst which allows to react the component (A) with the component (B) is further blended.

3. The thermoplastic resin composition according to claim 1 or 2, wherein the catalyst is at least one selected from the group consisting of amine compounds, phosphorons compounds and imicazoles.

4. The thermoplastic resin composition according to claim 1, 2 or 3 wherein the structural unit having the glycidyl group contained in the modified polyolefin polymer is represented by the following formula (II):

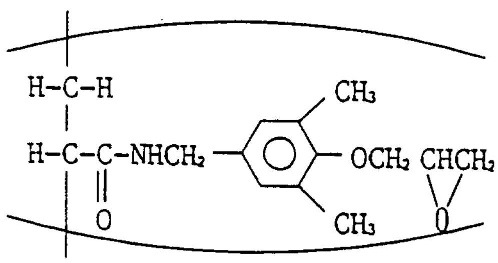

(II)

5. The thermoplastic resin composition according to any one of claims 1 to 4, wherein the repeating unit of olefin is a homopolymer selected from the group consisting of ethylene, propylene, 1-butene, 1-pentene, iso-butene, butadiene, isoprene, chloroprene, phenylpropadiene, cyclopentadiene, 1,5-norbonanodiene, 1,3-cyclohexadiene, 1,4-cyclohexadiene, 1,5-cyclooctadiene and 1,3-cyclooctadiene or a mixture thereof, a copolymer comprising two or more monomers selected therefrom or a mixture thereof or a mixture of said homopolymer and said copolymer.

6. The thermoplastic resin composition according to any one of claims 1 to 5, wherein the polyester is one prepared by ring-opening polymerization of lactones.

7. The thermoplastic resin composition according to any one of claims 1 to 5, wherein the polyester is one prepared by the reaction of at least one compound selected from the group consisting of dihydric alcohols and dihydric phenols with at least one compound selected from the group consisting of dicarboxylic acids, acid anhydrides thereof, acid halides thereof and lower esters thereof.

8. A thermoplastic resin composition obtainable by molten kneading of the modified polyolefin polymer and the polyester, as set forth in any one of claims 1 to 7.

**9.** A method for producing a thermoplastic resin composition which comprises molten kneading of the modified polyolefin polymer and the polyester, as set forth in any one of claims 1 to 7.

# INTERNATIONAL SEARCH REPORT

International Application No PCT/JP91/01320

**I. CLASSIFICATION OF SUBJECT MATTER** (if several classification symbols apply, indicate all) [6]

According to International Patent Classification (IPC) or to both National Classification and IPC

Int. $Cl^5$ C08L67/02, 67/04

**II. FIELDS SEARCHED**

Minimum Documentation Searched [7]

| Classification System | Classification Symbols |
|---|---|
| IPC | C08L67/02-67/04 |

Documentation Searched other than Minimum Documentation to the Extent that such Documents are Included in the Fields Searched [8]

Jitsuyo Shinan Koho 1926 - 1991
Kokai Jitsuyo Shinan Koho 1971 - 1991

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 62-187756 (Asahi Chemical Industry Co., Ltd.), August 17, 1987 (17. 08. 87), Line 5, lower left column to line 16, lower right column, page 1 (Family: none) | 1-9 |
| A | JP, A, 60-173056 (Toyobo Co., Ltd.), September 6, 1985 (06. 09. 85), Lines 5 to 15, lower left column, page 1 (Family: none) | 1-9 |
| A | JP, A, 60-40154 (Toray Industries, Inc.), March 2, 1985 (02. 03. 85), Lines 5 to 15, lower left column, page 1 (Family: none) | 1-9 |
| A | JP, A, 63-37109 (Kanegafuchi Chemical Industry Co., Ltd.), February 17, 1988 (17. 02. 88), Line 6, lower left column, page 1 to line 14, upper right column, page 2 (Family: none) | 1-9 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 11, 1991 (11. 12. 91) | January 7, 1992 (07. 01. 92) |
| **International Searching Authority** | **Signature of Authorized Officer** |
| Japanese Patent Office | |